# EUROPEAN PATENT SPECIFICATION

(11) **EP 3 049 575 B1**
(45) Date of publication and mention of the grant of the patent: **01.05.2019**
(21) Application number: 14848650.9
(22) Date of filing: 15.09.2014
(51) Int. Cl.: E02B 15/10, E02B 15/04, B63B 35/32

(54) **A METHOD AND AN APPARATUS FOR COLLECTING OIL FROM A SURFACE OF WATER**
VERFAHREN UND VORRICHTUNG ZUM SAMMELN VON ÖL VON EINER WASSEROBERFLÄCHE
PROCÉDÉ ET APPAREIL PERMETTANT DE COLLECTER DE L'HUILE SE TROUVANT SUR UNE SURFACE D'EAU

(30) Priority: 27.09.2013 FI 20135966
(43) Date of publication of application: 03.08.2016
(73) Proprietor: Lamor Corporation Ab, 06100 Porvoo (FI)
(72) Inventor: NORDSTRÖM, Lauri, FI-00180 Helsinki (FI)
(74) Representative: Boco IP Oy Ab
(86) International application number: PCT/FI2014/050703
(87) International publication number: WO 2015/044515

(56) References cited:
- WO-A1-91/07545
- WO-A1-2007/071813
- NO-B1- 321 980
- US-A- 3 617 555

## Description

### FIELD OF THE INVENTION

The present invention relates to a method of collecting oil, and particularly to a method for collecting oil from a surface of water. The present invention further concerns an apparatus for collecting oil from a surface of water.

### BACKGROUND OF THE INVENTION

Document WO 2007/059606 A1 discloses a skimmer used to remove both heavy and light oil from a body of water or for the removal of either light or heavy oil and a method of operation of the skimmer. The heavier oil is removed from a first location on a rotating member and the lighter oil is removed from a second location on the rotating member. The oil removed at both locations is collected at a single location and a pump removes the oil from the skimmer.

Document US 3617555 A1 discloses a method and an apparatus having the features of the preamble of claim 1 and claim 7 respectively. In particular the document removing oil and debris from the surface of water using a revolving, partially submerged, endless brush belt. The brush belt has outwardly projecting bristles which ensnare the debris and pick up oil. Polypropylene bristles are preferred. The oil and debris are removed from the belt before the belt is reimmersed in the water. Alternatively, a brush-type drum could be used in place of the endless brush belt.

A problem with the known skimmer is that excess water that is mixed with the removed oil is transferred with the oil via a brush wheel to a container for the removed oil when using the skimmer. This requires more storage space for the removed oil.

### BRIEF DESCRIPTION OF THE INVENTION

An object of the present invention is to provide a method and an apparatus for implementing the method so as to overcome the above problems.

The objects of the invention are achieved by a method and an apparatus, which are characterized by what is stated in the independent claims. The preferred embodiments of the invention are disclosed in the dependent claims. The invention is based on the idea of leading the oil collected from a surface of water to a converging space and a gap for increasing the speed of the collected oil. This causes water to separate from the oil and flow back to the body of water.

An advantage of the method and arrangement of the invention is that less storage space for the collected oil is needed and thus more oil can be collected before the collected oil storage has to be emptied.

### BRIEF DESCRIPTION OF THE DRAWINGS

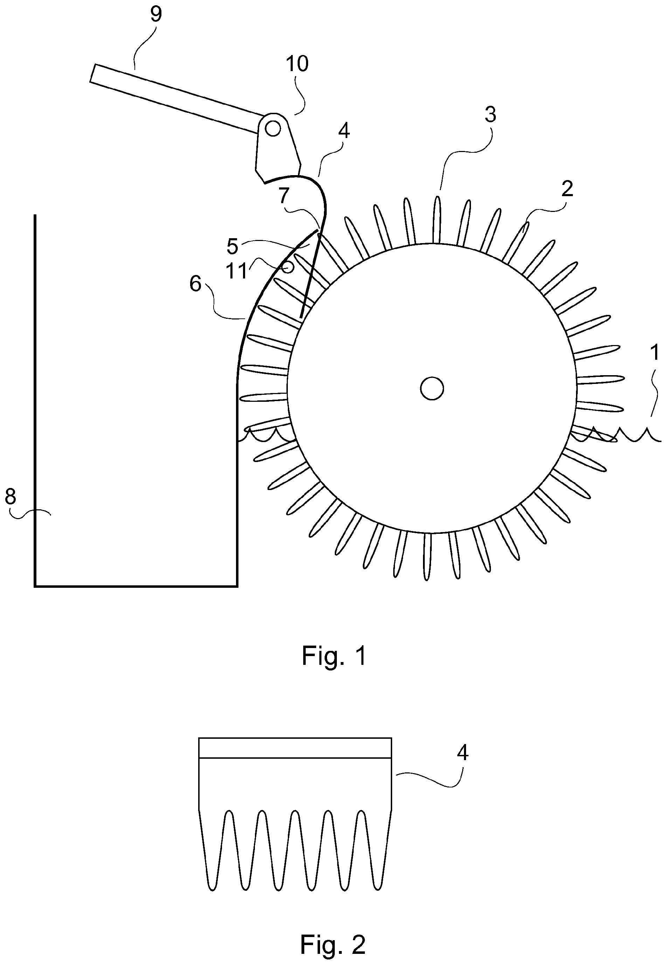

In the following the invention will be described in greater detail by means of preferred embodiments with reference to the accompanying drawings, in which
Figure 1 is a schematic drawing of the apparatus according to an embodiment of the invention;
Figure 2 is a schematic drawing of a scraper comb used in the apparatus.

### DETAILED DESCRIPTION OF THE INVENTION

The invention relates to a method for collecting oil from a surface 1 of water. The method comprises the steps of
- collecting oil from a surface 1 of water to bristles 2 of a rotating brush wheel 3,
- scraping oil from the bristles 2 of the rotating brush wheel 3 using a scraper comb 4,
- leading scraped oil to a space 5 formed between the scraper comb 4 and a wall 6, the space 5 having a converging shape,
- leading oil along the converging space 5 to a gap 7,
- leading oil through the gap 7, and
- leading oil from the gap 7 to a container 8.

By surface of water is meant a surface of a body of water, for example a lake or a sea.

The rotating brush 3 is preferably connected to a marine vessel. During collecting oil the marine vessel can be stationary or in motion.

The scraped oil is packed to the converging space 5 and through the gap 7 by the pressure caused by rotating brush wheel 3 feeding more oil to the space 5. The converging space 5 causes the oil to increase speed when travelling through the space 5. This causes water to separate from the oil. Separated water then runs back to the body of water. Preferably the surface of the brush wheel 3 at the stem of the bristles 2 comprises tangential grooves for improving the flow of the separated water. Separated water flows along the grooves back to the body of water.

According to an embodiment the gap 7 is formed by the scraper comb 4 and the wall 6 and being situated at the end of convergence of the space 5. According to an embodiment the scraper comb 4 has at least partially curved shape for directing oil received from the gap 7 towards the container 8. According to an embodiment of the invention the width of the gap 7 is adjusted. Adjusting the width of the gap 7 allows collecting different kinds of oils using the same brush wheel 3 without the need for changing the brush wheel 3 according to the type of the oil collected.

According to an embodiment the width of the gap 7 is adjusted during collecting oil. Adjusting the gap 7 during collecting oil allows collecting oil in situations where several different types of oil have been spilled.

According to an embodiment the width of the gap 7 is adjusted by moving the scraper comb 4 and/or the wall 6. Preferably the width of the gap 7 is adjusted by moving the scraper comb 4 in relation to the wall 6. It is also possible to have a movable, deformable or flexible wall and adjust the gap 7 by moving the wall 6 in relation to the scraper comb 4.

The gap 7 is having a width of between 1 to 15 mm. The width of the gap 7 depends on the oil collected. Light oils, such as diesel oil, require narrow gap 7. Heavy oils require wide gap 7. If the gap is too narrow, the collecting efficiency is reduced. If the gap is too wide, excess water is collected with the oil to the container. An operator of the skimming equipment is able to determine the optimal gap width for the current situation based on a visual observation of the flow of the collected oil from the gap 7 to the container 8. It is also possible to adjust the gap 7 before collecting oil based on information of the oil type obtained beforehand.

Oil collected to the brush wheel 3 can be scraped off the brush wheel 3 on a position that is above the surface 1 of the water. Preferably the collected oil is scraped off after the brush bristles 2 rise from the surface 1 of the water, but before it reaches the topmost position of the brush wheel 3. Oil is scraped from the brush wheel 3 in a position less than 180 ° from the lowest position of the brush wheel 3 in the direction of rotation of the brush wheel 3. This improves the flow of the water separated from the oil back to the body of water as it can flow downwards away from the converging space.

According to an embodiment the wall 6 is a part of a wall of the container 8 or a part of a sluice directing oil from the gap 7 to the container 8.

According to an embodiment the brush bristles 2 are bent and released before the collected oil is scraped off the brush wheel 3. According to an embodiment the brush bristles 2 are bent using a bar 11 arranged in the converging space 5. Preferably the bar 11 is arranged parallel with the rotation axis of the brush wheel 3. Bending and releasing the brush bristles 2 improves separation of oil from the brush bristles 2.

The invention also relates to an apparatus for collecting oil from a surface of water, comprising
- a rotatable brush wheel 3 for collecting oil from a surface 1 of water on the bristles 2 of the rotatable brush wheel 3,
- a scraper comb 4 adapted to scrape oil from the bristles 2 of the brush wheel 3,
- a container 8 for containing collected oil,
- a leading means for leading scraped oil from the scraper comb 4 to the container 8,
- a space 5 having a converging shape formed between the scraper comb 4 and a wall 6, the space 5 being adapted to receive oil from the scraper comb 4, and
- a gap 7 in fluid connection with the space 5 adapted to receive oil from the space 5 and to lead oil through the gap 7 towards the container 8.

According to an embodiment of the invention the gap 7 is formed by the scraper comb 4 and the wall 6 and it is situated at the end of convergence of the space 5.

According to an embodiment the apparatus comprises adjusting means 9 for adjusting the gap 7. According to an embodiment the adjusting means 9 for adjusting the gap 7 is adapted to adjust the width of the gap 7 by moving the scraper comb 4 and/or the wall 6.

The width of the gap 7 is between 1 to 15 mm.

According to an embodiment of the invention the apparatus comprises adjusting means 10 for adjusting the space 5. According to an embodiment the adjusting means 10 for adjusting the space 5 is adapted to adjust the angle of convergence of the space 5. For example the adjusting means 10 for adjusting the space 5 is adapted to tilt the scraper comb 4 in relation to the wall 6.

According to an embodiment the adjusting means 9 for adjusting the gap 7 and/or the adjusting means 10 for adjusting the space 5 is/are adapted to adjust the distance between the scraper comb 4 and the brush wheel 3.

Preferably the adjusting means 9 for adjusting the gap 7 are such that an operator of the apparatus can adjust the gap 7 while using the apparatus. There are numerous ways how to implement the adjusting means 9 for adjusting the gap 7 and the adjusting means 10 for adjusting the space. A skilled person can easily figure out, how to implement these means.

The scraper comb 4 is adapted to scrape oil from the bush wheel 3 in a position less than 180 ° from the lowest position of the brush wheel 3 in the direction of rotation of the brush wheel 3.

According to an embodiment the wall 6 is a part of a wall of the container 8 or a part of a sluice directing oil from the gap 7 to the container 8.

According to an embodiment the wall 6 is curved or straight.

According to an embodiment the apparatus comprises a means for bending and releasing the brush bristles 2 when the brush wheel 3 is rotating. According to an embodiment the means for bending and releasing the brush bristles 2 comprises a bar 11 arranged in the converging space 5. Preferably the bar 11 is arranged parallel with the rotation axis of the brush wheel 3.

The invention also relates to a use of the method or the apparatus of the invention for collecting oil, wherein the gap 7 is adjusted according the viscosity of the oil.

## Claims

1. A method for collecting oil from a surface (1) of water wherein the method comprises the steps of
collecting oil from a surface (1) of water to bristles (2) of a rotating brush device, scraping oil from the bristles (2) of the rotating brush device using a scraper comb (4),
leading scraped oil to a space (5) formed between the scraper comb (4) and a wall (6), the space (5) having a converging shape,
**characterized in that** the method further comprises the steps of leading oil along the converging space (5) to a gap (7) having a width of between 1 to 15 mm,
leading oil through the gap (7), and
leading oil from the gap (7) to a container (8),
wherein the brush device is a brush wheel (3) and oil is scraped from the brush wheel (3) in a position less than 180° from the lowest position of the brush wheel (3) in the direction of rotation of the brush wheel (3).

2. A method according to any one of the previous claims, wherein the gap (7) is formed by the scraper comb (4) and the wall (6) and being situated at the end of convergence of the space (5).

3. A method according to the previous claim, wherein the width of the gap (7) is adjusted.

4. A method according to any one of the previous claims, wherein the width of the gap (7) is adjusted during collecting oil.

5. A method according to any one of the previous claims, wherein the width of the gap (7) is adjusted by moving the scraper comb (4) and/or the wall (6).

6. A method according to any one of the previous claims, the wall (6) being a part of a wall of the container (8) or a part of a sluice directing oil from the gap (7) to the container (8).

7. An apparatus for collecting oil from a surface of water, comprising
a rotatable brush device for collecting oil from a surface (1) of water on the bristles (2) of the rotatable brush device, a scraper comb (4) adapted to scrape oil from the bristles (2) of the brush device, a container (8) for containing collected oil, and
a leading means for leading scraped oil from the scraper comb (4) to the container (8), and
a space (5) having a converging shape formed between the scraper comb (4) and a wall (6), the space (5) being adapted to receive oil from the scraper comb (4),
**characterized in that** the apparatus further comprises a gap (7) having a width of between 1 to 15 mm in fluid connection with the space (5) adapted to receive oil from the space (5) and to lead oil through the gap (7) towards the container (8),
wherein the brush device is a brush wheel (3) and the scraper comb (4) is adapted to scrape oil from the bush wheel (3) in a position less than 180° from the lowest position of the brush wheel (3) in the direction of rotation of the brush wheel (3).

8. An apparatus according to claim 7, wherein the gap (7) is formed by the scraper comb (4) and the wall (6) and it is situated at the end of convergence of the space (5).

9. An apparatus according to any one of claims 7 to 8 comprising adjusting means (9) for adjusting the gap (7).

10. An apparatus according to any one of claims 7 to 9, wherein the adjusting means (9) for adjusting the gap (7) is adapted to adjust the width of the gap (7) by moving the scraper comb (4) and/or the wall (6).

11. An apparatus according to any one of claims 8 to 10 comprising adjusting means (10) for adjusting the space (5).

12. An apparatus according to any one of claims 7 to 11, wherein the adjusting means (10) for adjusting the space (5) is adapted to adjust the angle of convergence of the space (5).

13. An apparatus according to any one of claims 7 to 12, wherein the wall (6) is a part of a wall of the container (8) or a part of a sluice directing oil from the gap (7) to the container (8).

14. An apparatus according to any one of claims 7 to 13, wherein the wall (6) is curved or straight.

15. Use of the method of claim 1 or the apparatus of claim 7 for collecting oil, **characterized in that** the gap (7) is adjusted according to the viscosity of the oil.

## Patentansprüche

1. Verfahren zum Sammeln von Öl auf einer Wasseroberfläche (1), wobei das Verfahren die Schritte umfasst:
Sammeln von Öl von einer Wasseroberfläche (1) an Borsten (2) einer rotierenden Bürstenvorrichtung (3),
Abstreifen von Öl von den Borsten (2) der rotierenden Bürstenvorrichtung mit Hilfe eines Abstreiferkamms (4),
Leiten von abgestreiftem Öl zu einem zwischen dem Abstreiferkamm (4) und einer Wand (6) ausgebildeten Raum (5), wobei der Raum (5) eine konvergierende Form aufweist,
**dadurch gekennzeichnet, dass** das Verfahren ferner die Schritte umfasst:
Leiten von Öl entlang des konvergierenden Raums (5) zu einem Spalt (7) mit einer Breite von 1 bis 15 mm,
Leiten von Öl durch den Spalt (7), und
Leiten von Öl vom Spalt (7) zu einem Behälter (8),
wobei die Bürstenvorrichtung ein Bürstenrad (3) ist und Öl vom Bürstenrad (3) an einer Position abgestreift wird, die weniger als 180 ° zur untersten Position des Bürstenrads (3) in Drehrichtung des Bürstenrads (3) liegt.

2. Verfahren nach einem der vorhergehenden Ansprüche, wobei der Spalt (7) durch den Abstreiferkamm (4) und die Wand (6) gebildet wird und sich am Ende der Konvergenz des Raums (5) befindet.

3. Verfahren nach dem vorhergehenden Anspruch, wobei die Breite des Spalts (7) verstellt wird.

4. Verfahren nach einem der vorhergehenden Ansprüche, wobei die Breite des Spalts (7) während des Sammelns von Öl verstellt wird.

5. Verfahren nach einem der vorhergehenden Ansprüche, wobei die Breite des Spalts (7) durch Bewegen des Abstreiferkamms (4) und/oder der Wand (6) verstellt wird.

6. Verfahren nach einem der vorhergehenden Ansprüche, wobei die Wand (6) ein Teil einer Wand des Behälters (8) oder ein Teil einer Schleuse ist, der Öl vom Spalt (7) zum Behälter (8) führt.

7. Vorrichtung zum Sammeln von Öl auf einer Wasseroberfläche, umfassend:
eine drehbare Bürstenvorrichtung zum Sammeln von Öl von einer Wasseroberfläche (1) an den Borsten (2) der drehbaren Bürstenvorrichtung,
einen Abstreiferkamm (4), der eingerichtet ist zum Abstreifen von Öl von den Borsten (2) der Bürstenvorrichtung,
einen Behälter (8) zum Halten von gesammelten Öl, und
ein Leitmittel zum Leiten von abgestreiftem Öl vom Abstreiferkamm (4) zum Behälter (8), und
einen Raum (5) mit konvergierender Form, der zwischen dem Abstreiferkamm (4) und einer Wand (6) ausgebildet ist, wobei der Raum (5) dazu eingerichtet ist, Öl vom Abstreiferkamm (4) aufzunehmen,
**dadurch gekennzeichnet, dass** die Vorrichtung ferner umfasst:
einen Spalt (7) mit einer Breite von 1 bis 15 mm in fluidischer Verbindung mit dem Raum (5), der eingerichtet ist zum Aufnehmen von Öl aus dem Raum (5) und zum Leiten von Öl durch den Spalt (7) zum Behälter (8),
wobei die Bürstenvorrichtung ein Bürstenrad (3) ist und der Abstreiferkamm (4) eingerichtet ist zum Abstreifen von Öl vom Bürstenrad (3) an einer Position, die weniger als 180 ° zur untersten Position des Bürstenrads (3) in Drehrichtung des Bürstenrads (3) liegt.

8. Vorrichtung nach Anspruch 7, wobei der Spalt (7) durch den Abstreiferkamm (4) und die Wand (6) gebildet wird und sich am Ende der Konvergenz des Raums (5) befindet.

9. Vorrichtung nach einem der Ansprüche 7 bis 8, die ein Verstellmittel (9) zum Verstellen des Spalts (7) umfasst.

10. Vorrichtung nach einem der Ansprüche 7 bis 9, wobei das Verstellmittel (9) zum Verstellen des Spalts (7) dazu eingerichtet ist, die Breite des Spalts (7) durch Bewegen des Abstreiferkamms (4) und/oder der Wand (6) zu verstellen.

11. Vorrichtung nach einem der Ansprüche 8 bis 10, die ein Verstellmittel (10) zum Verstellen des Raums (5) umfasst.

12. Vorrichtung nach einem der Ansprüche 7 bis 11, wobei das Verstellmittel (10) zum Verstellen des Raums (5) dazu eingerichtet ist, den Konvergenzwinkel des Raums (5) zu verstellen.

13. Vorrichtung nach einem der Ansprüche 7 bis 12, wobei die Wand (6) ein Teil einer Wand des Behälters (8) oder ein Teil einer Schleuse ist, der Öl vom Spalt (7) zum Behälter (8) führt.

14. Vorrichtung nach einem der Ansprüche 7 bis 13, wobei die Wand (6) gekrümmt oder gerade ist.

15. Verwendung des Verfahrens aus Anspruch 1 oder der Vorrichtung aus Anspruch 7 zum Sammeln von Öl, **dadurch gekennzeichnet, dass** der Spalt (7) entsprechend der Viskosität des Öls verstellt wird.

## Revendications

1. Procédé de récupération d'huile sur une surface d'eau (1), dans lequel le procédé comprend les étapes consistant à
récupérer de l'huile sur une surface d'eau (1) vers les crins (2) d'un dispositif à brosse tournante (3),
enlever l'huile aux crins (2) du dispositif à brosse tournante à l'aide d'un peigne racleur (4),
acheminer l'huile raclée vers un espace (5) formé entre le peigne racleur (4) et une paroi (6), ledit espace (5) ayant une forme convergente,
**caractérisé en ce que** ledit procédé comprend également les étapes consistant à
acheminer l'huile le long de l'espace convergent (5) vers un interstice (7) ayant une largeur comprise entre 1 et 15 mm,
acheminer l'huile à travers l'interstice (7), et
acheminer l'huile de l'interstice (7) dans un récipient (8),
ledit dispositif à brosse étant une roue à brosse (3) et l'huile étant enlevée par raclage à la roue à brosse (3) dans une position inférieure à 180 degrés par rapport à la position la plus basse de la roue à brosse (3) dans le sens de rotation de la roue à brosse (3).

2. Procédé selon l'une des revendications précédentes, dans lequel l'interstice (7) est formé par le peigne racleur (4) et la paroi (6) et est situé en fin de convergence de l'espace (5).

3. Procédé selon la revendication précédente, dans lequel la largeur de l'interstice (7) est ajustée.

4. Procédé selon l'une des revendications précédentes, dans lequel la largeur de l'interstice (7) est ajustée pendant la récupération d'huile.

5. Procédé selon l'une des revendications précédentes, dans lequel la largeur de l'interstice (7) est ajusté par le déplacement du peigne racleur (4) et/ou de la paroi (6).

6. Procédé selon l'une des revendications précédentes, dans lequel la paroi (6) est une partie d'une paroi du récipient (8) ou une partie d'un sas dirigeant l'huile de l'interstice (7) dans le récipient.

7. Dispositif de récupération d'huile sur une surface d'eau, comprenant un dispositif à brosse rotative pour récupérer de l'huile sur une surface d'eau (1) par les crins (2) du dispositif à brosse rotative,
un peigne racleur (4) adapté pour enlever l'huile aux crins (2) du dispositif à brosse,
un récipient (8) pour stocker l'huile récupérée, et
un moyen d'acheminement pour acheminer l'huile raclée du peigne racleur (4) en direction du récipient (8), et
un espace (5) en forme convergente formé entre le peigne racleur (4) et une paroi (6), ledit espace (5) étant adapté pour accueillir de l'huile venant du peigne racleur (4),
**caractérisé en ce que** ledit dispositif comprend également:
un interstice (7) ayant une largeur comprise entre 1 et 15 mm en liaison fluidique avec l'espace (5), adapté pour accueillir l'huile venant de l'espace (5) et pour acheminer l'huile à travers l'interstice (7) en direction du récipient (8),
ledit dispositif à brosse étant une roue à brosse (3) et le peigne racleur (4) étant adapté pour enlever l'huile à la roue à brosse (3) dans une position inférieure à 180 degrés par rapport à la position la plus basse de la roue à brosse (3) dans le sens de rotation de la roue à brosse (3).

8. Dispositif selon la revendication 7, dans lequel l'interstice (7) est formé par le peigne racleur (4) et la paroi (6) et est situé en fin de convergence de l'espace (5).

9. Dispositif selon l'une des revendications 7 à 8, comprenant un moyen de réglage (8) pour ajuster l'interstice (7).

10. Dispositif selon l'une des revendications 7 à 9, dans lequel le moyen de réglage (9) pour ajuster l'interstice (7) est adapté pour ajuster la largeur de l'interstice (7) par le déplacement du peigne racleur (4) et/ou de la paroi (6).

11. Dispositif selon l'une des revendications 8 à 10, comprenant un moyen de réglage (8) pour ajuster l'espace (5).

12. Dispositif selon l'une des revendications 7 à 11, dans lequel le moyen de réglage (10) pour ajuster l'espace (5) est adapté pour ajuster l'angle de convergence de l'espace (5).

13. Dispositif selon l'une des revendications 7 à 12, dans lequel la paroi (6) est une partie d'une paroi du récipient (8) ou une partie d'un sas dirigeant l'huile de l'interstice (7) vers le récipient (8).

14. Dispositif selon l'une des revendications 7 à 13, dans lequel la paroi (6) est courbe ou rectiligne.

15. Utilisation du procédé selon la revendication 1 ou du dispositif selon la revendication 7 pour la récupération d'huile, **caractérisée en ce que** l'interstice (7) est ajusté en fonction de la viscosité de l'huile.
